(19) Europäisches Patentamt
European Patent Office
Office européen des brevets

(11) Publication number : **0 417 562 B1**

(12) **EUROPEAN PATENT SPECIFICATION**

(45) Date of publication of patent specification : **09.02.94 Bulletin 94/06**

(51) Int. Cl.$^5$ : **A23D 9/00,** A23J 7/00

(21) Application number : **90116677.7**

(22) Date of filing : **30.08.90**

# (54) Water-in-oil emulsion composition.

(30) Priority : **01.09.89 JP 226842/89**

(43) Date of publication of application : **20.03.91 Bulletin 91/12**

(45) Publication of the grant of the patent : **09.02.94 Bulletin 94/06**

(84) Designated Contracting States : **CH DE ES FR GB LI NL**

(56) References cited :
**EP-A- 0 075 463**
**EP-A- 0 171 112**
**EP-A- 0 378 893**
**US-A- 2 062 782**
**US-A- 2 089 470**
**US-A- 3 896 975**
**US-E- 28 903**

(73) Proprietor : **Kao Corporation**
**14-10, Nihonbashi Kayabacho 1-chome**
**Chuo-Ku Tokyo 103 (JP)**

(72) Inventor : **Omura, Hisao**
**Kaoshataku 1-302, 8762-23, Doaihoncho 1-chome**
**Hazakimachi, Kashima-gun, Ibaraki (JP)**
Inventor : **Yokomichi, Hideki**
**Kaoshataku 1-403, 8762-23, Doaihoncho 1-chome**
**Hazakimachi, Kashima-gun, Ibaraki (JP)**
Inventor : **Masui, Kenji**
**Kaoryo, 8762-23, Doaihoncho 1-chome**
**Hazakimachi, Kashima-gun, Ibaraki (JP)**
Inventor : **Tanaka, Yukitaka**
**Kaoshataku 1-104, 8762-23, Doaihoncho 1-chome**
**Hazakimachi, Kashima-gun, Ibaraki (JP)**

(74) Representative : **Patentanwälte Dr. Solf & Zapf**
**Zeppelinstrasse 53**
**D-81669 München (DE)**

EP 0 417 562 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### Field of the Invention

This invention relates to a water-in-oil emulsion having excellent emulsion stability.

### Prior Art

When the proportion of the aqueous phase increases in a water-in-oil emulsion, the emulsion state gets unstable and the separation between the aqueous phase and the oil phase and furthermore the phase inversion from the water-in-oil type to the oil-in-water type are likely to occur during the production process.

In the above emulsion, exudation of the moisture and oil-off occur during storage and, when bulk handling is made, destruction of emulsion and the resulting separation of the aqueous phase and rottening take place. For these reasons, this type of emulsion cannot be used satisfactorily for various applications.

The use of various emulsifiers has been proposed in the past in order to solve these problems. For instance, a method which uses sucrose fatty acid esters of HLB of 1 to 4 (JP-B-56-11014), a method which uses glycerine fatty acid esters (US-A-3,889,005) and a method which uses polyglycerine fatty acid esters in combination with saturated fatty acid esters having a carbon number of at least 12 (JP-A-58-170432) are known.

However, even when these emulsifiers are used, the problems with the water-in-oil emulsion described above cannot be solved sufficiently. More specifically, when the sucrose fatty acid esters of HLB of 1 to 4 or the glycerine fatty acid esters described above are used, the water-in-oil emulsion can be produced in fact, but the resulting product has low stability with the passage of time even when stored below normal temperatures and causes exudation of the moisture and destruction of the emulsion, followed by the separation of the aqueous phase when it is spread.

When polyglycerine ester of condensed ricinoleic acid which has particularly high emulsion stability among the polyglycerine fatty acid esters is used, the tissue of the product is soft and exhibits a paste-like form, so that shape retentivity is low and oil-off is likely to occur. In addition, when the product is kept at low temperatures, stability with the passage of time is low and the separation of the aqueous phase occurs.

EP-A-0 378 893 describes an edible oil and fat composition wherein the oil and fat composition comprises a glyceride mixture and a phospholipid mixture wherein the phospholipid mixture preferably contains nitrogeneous phospholipids in an amount equal to or less than the amount of non-nitrogeneous phospholipids. The glyceride mixture preferably comprises 5-100 wt.% of diglycerides. The edible oil/fat compositions comprising the diglyceride mixture and the phospholipids exhibit advantages as good stability against oxidation and heat which may occur by cooking and provide little greasy or oily distastefulness and do not sit heavy in the stomach when taken in the raw state as in dressings and mayonnaises. Object of the edible oil/fat composition of this document is to produce no greasy or oily distastefulness after ingestion, good mould releasing effects, superior anti-spattering effects and the like. There is no teaching or suggestion of forming a w/o emulsion exhibiting emulsion stability during storage as in the present claimed invention.

US-A-2,062,782 relates to the treatment of lecithin and lecithin containing materials and particularly relates to the facilitation of a dispersion of lecithin in aqueous and olagineous media and the preservation thereof over a relatively long period of time.

US-A-2,089,470 describes margarines, particularly methods of producing improved and non-weeping margarine. The principle object of this invention is the provision of an improved margarine and the applicants of this document have found that an intimate mixture of a commercial lecithin and a substantial proportion of a dye-fatty acid glyceride can be dispersed in an aqueous material forming a paste which can be readily and easily kneaded or blended into a plastic margarine emulsion to produce a commercially satisfactory margarine, whereby the proportions of lecithin and diglycerides employed maybe decreased without any sacrifice in anti-spattering and anti-weeping functions in the margarine.

### Summary of the Invention

Object of the invention is the provision of a water-in-oil emulsion which does not show the above mentioned problems, has excellent stability and shape retentivity during storage for an extended period of time or at high temperatures.

The present invention provides a water-in-oil emulsion comprising (a) the oil phase of a diglyceride mixture, (b) the aqueous phase and (c) 0.01 to 10 wt.% based on the oil phase, of a phospholipid mixture comprising (c-1) a nitrogen-free phospholipid and (c-2) a nitrogen-containing phospholipid at a weight ratio of (c-1) to (c-2) of at least 1.0, wherein the weight ratio of the oil phase to the aqueous phase ranges from 99/1 to 5/99 and

the phospholipid mixture (c) contains at least 15 wt.%, based on the entire phospholipids, of phosphatidic acid and/or phosphatidic acid salt and wherein the diglyceride mixture contains 0.1 to 80 wt.% of one or more diglycerides.

Preferably the diglyceride mixture contains 0.1 to 80 wt.% of one or more diglycerides and the diglycerides have fatty acid moieties of 8 to 24 carbon atoms and at least 70 wt.%, based on the entire fatty acid moieties, of unsaturated fatty acid moieties.

Preferably the phospholipid mixture (c) contains at least 15 wt.%, based on the entire phospholipids, of phosphatidic acid and/or a phosphatidic acid salt and the phosphatidic acid has the formula (I) or (II):

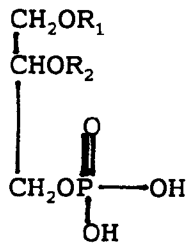

(I)

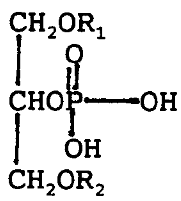

(II)

in which $R_1$ or $R_2$ each are an aliphatic acyl group having 8 to 24 carbon atoms, saturated or unsaturated.

Now the present invention will be described in detail.

The phospholipid mixture to be used in the water-in-oil emulsion of the present invention is one containing a reduced amount of phosphatidylcholine or phosphatidylethanolamine wherein the weight ratio of a nitrogen-free phospholipid to a nitrogenous phospholipid is at least 1.0. The quantity of this phospholipid mixture in the water-in-oil emulsion of the present invention is 0.01 to 10 wt.%, preferably 0.05 to 5 wt.%, in the oil phase.

Examples of the phospholipid mixture containing a reduced amount of the nitrogenous phospholipid such as phosphatidylcholine or phosphatidylethanolamine which can be used in the present invention include those containing phosphatidic acid or/and its salts, phosphatidylinositol, phosphatidylglycerol and further their lysophospholipids.

Examples of the salts that constitute the phosphatidic acid salts are sodium, potassium, calcium, aluminum, magnesium and ammonium. The phosphatidic acid or/and phosphatidic acid salts may contain lysophosphatidic acid or/and lysophosphatidic acid salts described above.

The phospholipid mixture described above in which a weight ratio of the nitrogen-free phospholipid to the nitrogenous phospholipid is at least 1.0 can be obtained by reducing the content of phosphatidylcholine and phosphatidylethanolamine through the enzymatic treatment (treatment by phospholipase D) using natural lecithin as the starting material or through the fractionation, for example, and increasing the content of the phosphatidic acid and phosphatidylinositol above the specific values. The natural lecithin used here is one originating in vegetables such as soybean, rapeseed, sunflower, or corn, or animals such as yolk.

The phospholipid mixture described above may further be treated by fractionation with a solvent, an ion-exchange column or a silicic acid column and electrodialysis.

Besides these phospholipids thus subjected to the enzymatic treatment, those phospholipids which are obtained by treating a monoglyceride or diglyceride with a phosphorus oxidizing agent (e.g. pentoxide, pentachloride or oxychloride) can be likewise used in the present invention.

The diglyceride-containing fat and oil components used in the present invention can be obtained by transesterifying in the presence of an alkali metal or (and) an alkaline earth metal a mixture of glycerine with at least one fat or oil selected from the group consisting of ordinary vegetable oils such as safflower oil, olive oil, corn seed oil, rapeseed oil, coconut oil, palm kernel oil, palm oil, soybean oil and corn oil,, animal fats and oils such as lard, beef tallow, fish oil, and milk fat,, or fractionated oils, transesterified oils, randomized oils and

hardened oils of these vegetable and animal fats and oils, by esterifying a mixture of a fatty acid with glycerine.

In order to increase the diglyceride content of the resulting diglyceride-containing component, the treatment by molecular distillation or silicic acid column chromatography is suitable and in order to reduce the diglyceride content, on the contrary, at least one of the starting fats and oils described above may be added thereto.

The diglyceride content of the water-in-oil emulsion of the present invention ranges from 0.1 to 80 wt% in the oil phase, preferably from 2 to 60 wt%. It is further preferred that the diglyceride exist in liquid form in the oil phase at a temperature at which the emulsion composition is used. Preferably, the diglyceride is at least one of those consisting of $C_8$ to $C_{24}$, preferably $C_{16}$ to $C_{22}$ fatty acid residues containing at least 70 wt% of unsaturated fatty acid residues of the total fatty acid residues.

The water-in-oil emulsion of the present invention may contain milk products, inorganic salts, saccharides, high-molecular polysaccharides, perfumes, acids and tasting agents as the side components of the aqueous phase or oil phase in accordance with the intended object.

Among them, the high-molecular polysaccharides are especially effective in further improving emulsion stability at high temperatures. Particular examples of the polysaccharides include gum arabic, carrageenan, locust bean gum, xanthan gum, guar gum, tamarind seed polysaccharides, taracant gum, dextrin, $\alpha$-starch, starch, carboxymethylcellulose, methylcellulose, sodium alginate, and pectin.

The aqueous phase which constitutes the water-in-oil emulsion of the present invention and uses water as the base may consist of water alone. It may contain milk products (e.g. milk protein), perfumes, tasting agents, and the like as the side components in the same way as that described above.

In the production of the water-in-oil emulsion of the present invention, mixing and emulsification are preferably made so that the mixing ratio of the oil phase containing 0.01 to 10 wt% of the phospholipid mixture, wherein the weight ratio of the nitrogen-free phospholipid to the nitrogenous phospholipid is at least 1.0, to the aqueous phase is 99/1 to 5/95 by weight. It is further preferred that the mixing and emulsification are made so that 0.1 to 80 wt% of the diglyceride is contained in the oil phase.

Since the water-in-oil emulsion in accordance with the present invention contains a specific amount of a specific phospholipid mixture in the oil phase, the preservation stability for a long time and high temperature resistance of the emulsion composition having a weight ratio of the oil phase to the aqueous phase of 99/1 to 5/95 can be improved drastically, and particularly the problems of exudation of the moisture, oil-off and the drop of shape retentivity that are likely to occur in the conventional water-in-oil emulsion compositions can be satisfactorily solved. Furthermore, the effect described above can be still increased by blending a specific amount of a diglyceride in the oil phase.

[Example]

Now the present invention will be described in further detail with reference to Reference Example, Examples and Comparative Examples, though the present invention is not limited to these examples.

The terms "part(s)" and "%" in the examples are by weight unless otherwise specified.

Reference Example 1: (Preparation of phospholipid mixture)

Soybean lecithin as the starting material was treated with phospholipase D to reduce the content of phosphatidylcholine and phosphatidylethanolamine and to increase the content of phosphatidylinositol and phosphatidic acid (and its calcium salts), thus obtaining phospholipid mixtures (1) and (2). The chemical compositions of these mixtures are given in the following Table 1.

For comparison, the chemical composition of soybean lecithin (phospholipid mixture (3)) is also given in Table 1.

Table 1: Composition of phospholipid mixture

| Sample No. | | Phospholipid mixture | | |
|---|---|---|---|---|
| | | (1) | (2) | (3) |
| acetone insolubles [1)] | (%) | 96.8 | 96.2 | 95.9 |
| PC content [2)] | (%) | 0.1 | 0.1 | 29.3 |
| PE content [3)] | (%) | 10.5 | 0.3 | 21.1 |
| PI content [4)] | (%) | 23.1 | 11.2 | 15.8 |
| PA content [5)] | (%) | 31.0 | 56.2 | 11.8 |

Remarks:

1) acetone insolubles:

lecithin content described in "Official Standard for Food Additives"

2) PC content:

phosphatidylcholine content of the acetone insolubles (wt%); TLC analytical value in accordance with "Standard Fats and Oils Analytical Test Methods", edited by the Japan Oil Chemists' Society (2.2.8.4a.86 phospholipid phosphorus composition)

3) PE content:

phosphatidylethanolamine content of the acetone insolubles (wt%); TLC analytical value obtained by the same method as 2)

4) PC content:

phosphatidylinositol content of the acetone insolubles (wt%); TLC analytical value obtained by the same method as 2)

5) PA content:

phosphatidic acid (and its calcium salts) content of the acetone insolubles (wt%); TLC analytical value obtained by the same method as 2)

Reference Example 2: (Production of oil composition)

After 25 parts of glycerine were added to 75 parts of refined rapeseed oil, 0.1 parts of calcium hydroxide were added to the mixture to conduct transesterification in a customary manner. Then, monoglyceride was removed by molecular distillation and refining was further carried out in a customary manner to obtain a transesterified oil. The glyceride composition of this oil was 19.4% of triglyceride, 79.6% of diglyceride and 1.0% of monoglyceride.

Next, this oil was mixed with the refined rapeseed oil in the proportions specified in Table 2 to prepare oil compositions (2), (3), (4) and (5). The oil composition consisting of the refined rapeseed oil alone was referred to as the oil composition (1).

Oil compositions (6) and (7) were prepared in the same way by using palm oil and lard as the starting materials, respectively.

The glyceride compositions of these compositions are given in Table 2.

Table 2: Glyceride composition of diglyceride-containing oil compositions (%)

| Oil composition | (1) | (2) | (3) | (4) | (5) | (6) | (7) |
|---|---|---|---|---|---|---|---|
| Oil source | refined rapeseed oil | refined rapeseed oil | refined rapeseed oil | refined rapeseed oil | refined rapeseed oil | palm oil | lard |
| Blend ratio of transesterified oil to refined rapeseed oil, palm oil or lard (weight ratio) | 0/100 | 6/94 | 13/87 | 25/75 | 38/62 | 38/62 | 36/64 |
| Glyceride composition[1)] (%) | | | | | | | |
| triglyceride | 98.7 | 94 | 88 | 79 | 69 | 68 | 70 |
| diglyceride | 1.2 | 5 | 11 | 20 | 30 | 30 | 27 |
| monoglyceride | 0.1 | 1 | 1 | 1 | 1 | 2 | 3 |

Remarks:

1) The glyceride composition (%) was determined by gas chromatography.

Examples 1 and 2:

Oil phases were prepared by blending 0.05, 0.1, 0.2, 0.5 and 1.0 wt%, based on the refined rapeseed oil, of the phospholipid composition (1) or (2) prepared above with 50 parts of the refined rapeseed oil and 50 parts of distilled water were added to each of these oil phases. Each mixture was emulsified with a homomixer to prepare a water-in-oil emulsion composition.

Each of the resulting compositions was transferred into a graduated test tube and either left settled at 25°C for 24 hours or at 80°C for 30 minutes, or centrifuged at 3000 rpm for 5 minutes after being left settled at 80°C for 30 minutes. The proportion of the separated aqueous phase to the total aqueous phase was measured so as to evaluate emulsion stability. The results are given in Table 3.

Comparative Example 1:

Oil phases were prepared by blending 0.05, 0.1, 0.2, 0.5 and 1.0 wt%, based on the refined rapeseed oil, of the phospholipid mixture (3) to 50 parts of the refined rapeseed oil and 50 parts of distilled water were added to each oil phase. Each mixture was emulsified with a homomixer to obtain a water-in-oil emulsion composition.

The emulsion stability of each of these emulsion compositions was evaluated by the same method as that of Examples 1 and 2. The results are given in Table 3.

Table 3: Stability evaluation of emulsion

| | Kind of phospholipid mixture blended | Quantity of phospholipid mixture (based on oil; wt%) | Emulsion stability[1] | | |
|---|---|---|---|---|---|
| | | | 25°C, 24 hr | 80°C 30 min | centrifugal separation at 3000 rpm for 5 min after settled at 80°C for 30 min |
| Example 1 | phospholipid mixture (1) | 0.05 | 9 | 18 | 35 |
| | | 0.1 | 0 | 7 | 18 |
| | | 0.2 | 0 | 0 | 0 |
| | | 0.5 | 0 | 0 | 0 |
| | | 1.0 | 0 | 0 | 0 |
| Example 2 | phospholipid mixture (2) | 0.05 | 0 | 0 | 0 |
| | | 0.1 | 0 | 0 | 0 |
| | | 0.2 | 0 | 0 | 0 |
| | | 0.5 | 0 | 0 | 0 |
| | | 1.0 | 0 | 0 | 0 |
| Comparative Example 1 | phospholipid mixture (3) | 0.05 | 88 | 92 | 96 |
| | | 0.1 | 70 | 90 | 96 |
| | | 0.2 | 48 | 85 | 90 |
| | | 0.5 | 20 | 76 | 84 |
| | | 1.0 | 7 | 72 | 77 |

Note:

1) Each emulsion composition prepared was either settled at 15°C for 24 hours and at 80°C for 30 minutes or settled at 80°C for 30 minutes and then centrifuged at 3000 rpm for 5 minutes, and the proportion (vol%) of the separated aqueous phase to the total aqueous phase was employed to represent stability.

Example 3 to 6:

Oil phases were prepared by blending 0.1 wt% of the phospholipid mixture (1) listed in Table 1 into 50 parts of each of the oil compositions (1) to (4) listed in Table 2, and 50 parts of distilled water were added to each of the oil phases. Each mixture was emulsified with a homomixer to prepare a water-in-oil emulsion composition.

The emulsion stability of each of the resulting emulsion compositions was evaluated by the same method as that of Examples 1 and 2. The results are given in Table 4.

Comparative Examples 2 to 5:

Oil phases were prepared by blending 0.1 wt%, based on each oil compositions (1) to (4) listed in Table 2, of the phospholipid mixture (3) listed in Table 1 with 50 parts of the oil compositions (1) to (4), and 50 parts of distilled water were added to each of the oil phases. Each mixture was emulsified with a homomixer to prepare a water-in-oil emulsion composition.

The emulsion stability of each of these emulsion compositions was evaluated by the same method as that of Examples 1 and 2. The results are given in Table 4.

Table 4

| | | Kind of oil composition | Kind of phospholipid mixture | Emulsion stability | | |
|---|---|---|---|---|---|---|
| | | | | 25°C, 24 hr | 80°C 30 min | centrifugal separation at 3000 rpm for 5 min after settled at 80°C for 30 min |
| Example | 3 | (1) | phospholipid mixture (1) | 0 | 7 | 18 |
| | 4 | (2) | | 0 | 0 | 0 |
| | 5 | (3) | | 0 | 0 | 0 |
| | 6 | (4) | | 0 | 0 | 0 |
| Comparative Example | 2 | (1) | phospholipid mixture (3) | 70 | 90 | 96 |
| | 3 | (2) | | 13 | 85 | 95 |
| | 4 | (3) | | 0 | 73 | 92 |
| | 5 | (4) | | 0 | 20 | 48 |

Example 7

A water-in-oil emulsion was prepared by mixing 0.1 wt%, based on the oil composition, of the phospholipid mixture (1) shown in Table 1 with 40 parts of the oil composition (4) shown in Table 2 to prepare an oil phase and then mixing the oil phase with 60 parts of distilled water, emulsified with a homomixer.

Example 8

A water-in-oil emulsion was prepared by mixing 0.1 wt%, based on the oil composition, of the phospholipid mixture (1) shown in Table 1 with 30 parts of the oil composition (4) shown in Table 2 to prepare an oil phase and then mixing the oil phase with 70 parts of distilled water, emulsified with a homomixer.

Comparative Example 6

A water-in-oil emulsion was prepared by mixing 0.1 wt%, based on the oil composition, of the phospholipid mixture (3) shown in Table 1 with 40 parts of the oil composition (4) shown in Table 2 to prepare an oil phase and then mixing the oil phase with 60 parts of distilled water, emulsified with a homomixer.

Comparative Example 7

A water-in-oil emulsion was prepared by mixing 0.1 wt%, based on the oil composition, of the phospholipid mixture (3) shown in Table 1 with 30 parts of the oil composition (4) shown in Table 2 to prepare an oil phase and then mixing the oil phase with 70 parts of distilled water, emulsified with a homomixer.

The emulsion compositions obtained in Examples 7 and 8, Comparative Examples 6 and 7 were evaluated in view of the emulsion stability by the same method as that of Eample 1. Results are shown in Table 5, which evidently show the water-in-oil emulsion compositions obtained in Examples are stabler as emulsions having a large amount of water. In the table, figures in the rightmost column show percent by volume of the separated aqueous phase to the total aqueous phase after the cetrifugal separation.

Table 5

| | | Kind of oil composition | Kind of phospholipid mixture | Ratio of aqueous phase to oil phase | Emulsion stability<br>Centrifugal separation at 3000 rpm for 5 min after settled at 80 °C for 30 min * |
|---|---|---|---|---|---|
| Example | 6 | (4) | (1) | 50/50 | 0 |
| | 7 | | | 60/40 | 0 |
| | 8 | | | 70/30 | 0 |
| Comparative Example | 5 | (4) | (3) | 50/50 | 48 |
| | 6 | | | 60/40 | 85 |
| | 7 | | | 70/30 | 89 |

## Claims

1. A water-in-oil emulsion comprising (a) the oil phase of a diglyceride mixture, (b) the aqueous phase and (c) 0.01 to 10 wt.% based on the oil phase, of a phospholipid mixture comprising (c-1) a nitrogen-free phospholipid and (c-2) a nitrogen-containing phospholipid at a weight ratio of (c-1) to (c-2) of at least 1.0, wherein the weight ratio of the oil phase to the aqueous phase ranges from 99/1 to 5/95 and the phospholipid mixture (c) contains at least 15 wt.%, based on the entire phospholipids, of phosphatidic acid and/or phosphatidic acid salt and wherein the diglyceride mixture contains 0.1 to 80 wt.% of one or more diglycerides.

2. The emulsion as claimed in claim 1, in which the diglyceride mixture contains 0.1 to 80 wt.% of one or more diglycerides and the diglycerides have fatty acid moieties of 8 to 24 carbon atoms and at least 70 wt.%, based on the entire fatty acid moieties, of unsaturated fatty acid moieties.

3. The emulsion as claimed in claim 1, in which the phospholipid mixture (c) contains at least 15 wt.%, based on the entire phospholipids, of phosphatidic acid and/or a phosphatidic acid salt and the phosphatidic acid has the formula (I) or (II) in which $R_1$ or $R_2$ each are an aliphatic acyl group having 8 to 24 carbon atoms, saturated or unsaturated.

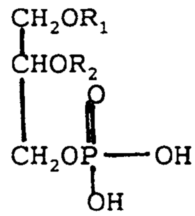

(I)

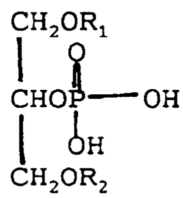

(II)

## Patentansprüche

1. Wasser-in-Öl-Emulsion, umfassend (a) die Ölphase einer Diglyceridmischung, (b) die wäßrige Phase und (c) 0,01 bis 10 Gew.-%, bezogen auf die Ölphase, einer Phosphorlipidmischung, umfassend (c-1) ein stickstoffreies Phosphorlipid und (c-2) ein stickstoffenthaltendes Phosphorlipid bei einem Gewichtsverhältnis von (c-1) zu (c-2) von wenigstens 1,0, wobei das Gewichtsverhältnis der Ölphase zu der wäßrigen Phase im Bereich von 99/1 bis 5/95 liegt und die Phosphorlipidmischung (c) wenigstens 15 Gew.-%, bezogen auf die gesamten Phosphorlipide, an Phosphatidsäure und/oder Phosphatidsäuresalz enthält und wobei die Diglyceridmischung 0,1 bis 80 Gew.-% eines oder mehrere Diglyceride enthält.

2. Emulsion nach Anspruch 1, wobei die Diglyceridmischung 0,1 bis 80 Gew.-% eines oder mehrere Diglyceride enthält und die Diglyceride Fettsäurehälften mit 8 bis 24 Kohlenstoffatomen und wenigstens 70 Gew.-%, bezogen auf die gesamten Fettsäurehälften, ungesättigte Fettsäurehälften besitzen.

3. Emulsion nach Anspruch 1, wobei die Phosphorlipidmischung (c) wenigstens 15 Gew.-%, bezogen auf die gesamten Phosphorlipide, an Phosphatidsäure und/oder einem Phosphatidsäuresalz enthält und die Phosphatidsäure die Formel (I) oder (II) besitzt, wobei $R_1$ oder $R_2$ jeweils eine gesättigte oder ungesättigte aliphatische Acylgruppe mit 8 bis 4 Kohlenstoffatomen bedeuten:

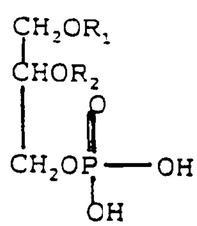

(I)

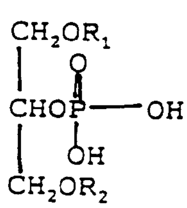

(II)

## Revendications

1. Une émulsion d'eau dans l'huile comprenant (a) une phase huileuse d'un mélange à base de diglycéride, (b) une phase aqueuse et (c) 0,01 à 10% en poids sur la base de la phase huileuse, d'un mélange à base de phospholipide comprenant (c-1) un phospholipide ne contenant pas d'azote et (c-2) un phospholipide contenant de l'azote dans un rapport pondéral de (c-1)/(c-2) d'au moins 1,0, dans laquelle le rapport pondéral de la phase huileuse sur la phase aqueuse varie entre 99/1 à 5/95 et le mélange à base de phospholipide (c) contient au moins 15% en poids sur la base de la quantité totale de phospholipides, d'acide phosphatidique et/ou de sel de l'acide phosphatidique et dans laquelle le mélange à base de diglycéride contient de 0,1 à 80% en poids d'un ou plusieurs diglycérides.

2. Emulsion selon la revendication 1, dans laquelle le mélange à base de diglycéride contient de 0,1 à 80% en poids d'un ou plusieurs diglycéride et dans laquelle les parties acide gras des diglycérides contiennent de 8 à 24 atomes de carbone et dans laquelle au moins 70% en poids des parties acides gras totales représentent des acides gras insaturés.

3. Emulsion selon la revendication 1, dans laquelle le mélange à base de phospholipide (c) contient au moins 15% en poids sur la base de la quantité totale de phospholipides, d'acide phosphatidique et/ou de sel de l'acide phosphati-dique et dans laquelle l'acide phosphatidique a pour formule (I) ou (II) dans lesquelles $R_1$ ou $R_2$ sont chacun un groupe acyle aliphatique saturé ou insaturé ayant de 8 à 24 atomes de carbone.

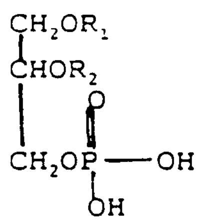

(I)

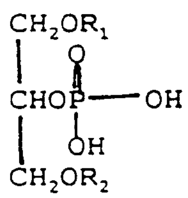

(II)